# FASCICULE DE BREVET EUROPEEN

(11) **EP 3 298 661 B1**
(45) Date de publication et mention de la délivrance du brevet: **03.07.2019**
(21) Numéro de dépôt: 16735906.6
(22) Date de dépôt: 19.05.2016
(51) Int. Cl.: H01R 13/523, H02G 11/00, B63J 3/04

(54) **CONNECTEUR ET EMBASE COMPACTS POUR ALIMENTER ÉLECTRIQUEMENT UN MOBILE A PARTIR D'UN RÉSEAU FIXE**
KOMPAKTER STECKER UND KOMPAKTE BUCHSE FÜR DEN ELEKTRISCHEN BETRIEB EINER TRAGBAREN VORRICHTUNG AUS EINEM FESTNETZ
COMPACT CONNECTOR AND COMPACT SOCKET FOR ELECTRICALLY POWERING A PORTABLE DEVICE FROM A FIXED NETWORK

(30) Priorité: 19.05.2015 FR 1501047
(43) Date de publication de la demande: 28.03.2018
(73) Titulaire: New Generation Natural Gas Natural Growth, 27200 Vernon (FR)
(72) Inventeur: FÉGER, Damien, 27200 Vernon (FR)
(74) Mandataire: Lavialle, Bruno François Stéphane
(86) Numéro de dépôt international: PCT/FR2016/051183
(87) Numéro de publication internationale: WO 2016/185144

(56) Documents cités:
- FR-A1- 2 946 471
- US-A- 3 635 184
- US-A1- 2004 127 084
- US-A1- 2006 079 107

## Description

### Domaine de l'invention

La présente invention se rapporte au domaine de l'alimentation électrique de mobiles, lorsqu'ils sont à l'arrêt, notamment d'un navire lorsqu'il est à quai. En effet, pour des raisons écologiques ou économiques, il est de plus en plus pertinent d'établir une possibilité d'échanger du courant entre les navires et la terre durant leurs escales, soit pour éviter la pollution de leur groupe électrogène embarqués, soit pour recharger, dans le cas de navire à propulsion électrique ou hybride, leurs capacités de stockage électrique.

### Etat de la technique antérieure

Une première approche est d'utiliser des connecteurs manuels que l'équipage ou le personnel du port manipule pour établir la connexion, éventuellement aidées par des systèmes, tels que des grues ou des palans, pour supporter la charge desdits connecteurs et de leurs câbles. Cette approche est évidemment coûteuse en terme de main d'oeuvre, génère une perte de temps et peut se révéler, dans le cas de puissances importantes, nécessitant des connecteurs et des câbles lourds et encombrants, dangereuse. Pour résoudre cette problématique, une première solution, décrite dans la demande de brevet d'invention 8906863 déposée le 25 mai 1989, porte sur l'utilisation d'un système de support du connecteur et des câbles par un portique mobile surplombant le navire et facilitant ainsi la manutention. Une seconde solution, décrite dans la demande de brevet d'invention 0902725 déposé le 5 juin 2009, porte sur l'utilisation, coté navire, d'un système de levage et du guidage du connecteur surplombant le quai, cette fois-ci complètement mécanisée. Cette approche supprime une manutention directe des connecteurs et des câbles par l'équipage mais requiert des mécanismes de guidage et de protection des contacts, côté connecteur et embases, complexes et donc à la fois coûteux, volumineux et peu fiables.

On pourra utilement, pour comprendre l'état de l'art dans ce domaine, se reporter à l'article « Courant de quai : la fête d'Ampère » paru dans la revue « Navires et marine marchande » en juillet 2013. L'objet de la présente demande est donc de présenter une solution innovante pour réduire la taille et la complexité des systèmes de connexion entre un mobile et le réseau fixe.

### Exposé de l'invention

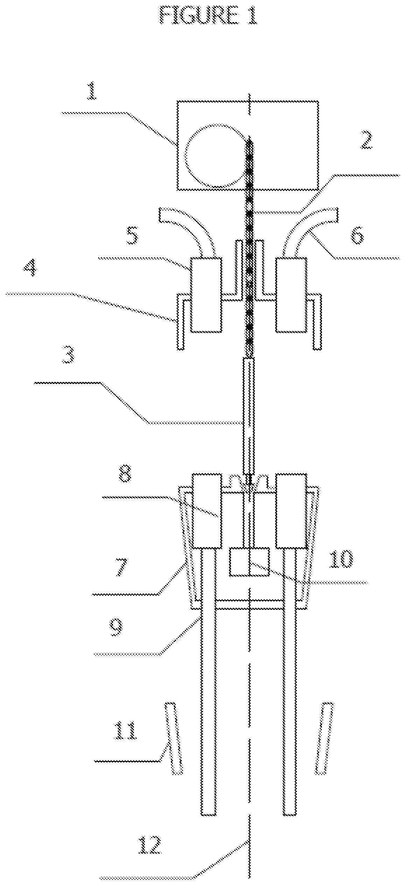

La figure 1 présente les principaux composants de la solution proposée :
- d'un côté, un guindeau (1) muni d'une chaine (2), ou alternativement un câble, au bout de laquelle se trouve une tige navette (3) traversant une embase (4) comportant les contacts (5) nécessaires à l'échange de courant, reliés aux câbles de puissance (6) ;
- de l'autre un connecteur (7) muni :
   - d'un jeu de contacts (8) et de câbles (9) de puissance correspondants à ceux de l'embase (4) ;
   - d'un système de guidage et de verrouillage (10) de la tige navette (3) ;
- un panier (11) recevant le connecteur (7) lorsqu'il n'est pas utilisé.

On voit que, par cet arrangement, pour peu que des moyens de guidage soient mis en place pour aligner, les uns en face des autres, les contacts respectifs de l'embase et du connecteur, il suffit, une fois la tige navette verrouillée avec le connecteur, de la hisser vers l'embase pour assurer la connexion.

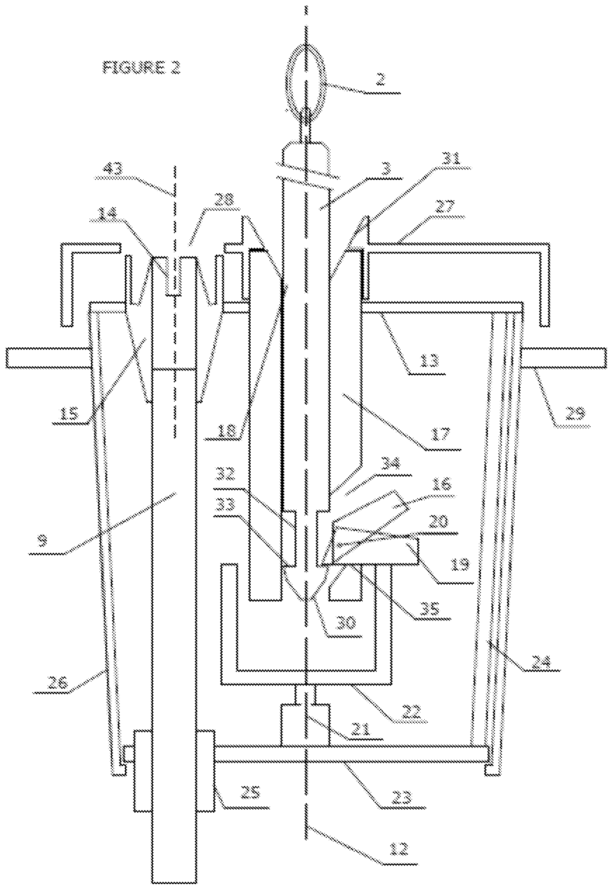

La figure 2 présente, sous la forme d'une vue en coupe, les principales caractéristiques internes d'un connecteur conçu suivant l'invention proposée, dans le cas d'un échange de puissance utilisant du courant triphasé nécessitant trois contacts de puissance (on notera que ce nombre n'est choisi qu'à titre d'exemple, et que suivant le besoin, l'invention proposée pourra s'appliquer à un nombre différent de contacts).

Ce connecteur est de géométrie sensiblement cylindrique autour de l'axe (12) et est principalement constitué :
- d'un flasque circulaire supérieur (13) recevant trois contacts (14) (que nous avons représentés ici, à titre d'exemple, comme des contacts femelles) entourés d'isolants (15) et reliés à trois câbles (16), correspondants aux trois phases utilisées, dans cet exemple, pour échanger la puissance entre le navire et le quai ;
- d'un moyeu central (17), relié mécaniquement au flasque supérieur (13), percé d'une cavité circulaire (18) dans lequel peut s'introduire, avec un jeu réduit, la tige navette (3), qui présente, elle aussi, une géométrie cylindrique autour de l'axe (12) ;
- d'un système de mâchoires (19) pivotant autour d'axes (20), axes mécaniquement solidaires du moyeu (17) et dont la rotation est commandée par un actionneur (21) via un poussoir (22) ;
- d'un flasque inférieur (23) relié mécaniquement au flasque supérieur (13) via une pluralité d'entretoises (24), supportant l'actionneur (21) et via les presse-étoupes (25) les câbles (16) ;
- d'un capot (26), de forme sensiblement conique, protégeant l'ensemble de ces mécanismes ;
- d'un couvercle (27) muni de trois ouvertures (28) correspondant aux contacts (14) tournant autour de l'axe (12) au-dessus du flasque supérieur (13) ;
- d'ergots (29) permettant d'imprimer un couple de rotation à l'ensemble du connecteur autour de l'axe (12) .

Moyennant toutes ces dispositions, le guidage et le verrouillage de la tige navette (3) dans le connecteur pourra s'effectuer de la manière suivante lorsque celle-ci est descendue, suspendue à la chaine (2), à l'aide du guindeau (1), le long de l'axe (12), vers la cavité (18) du moyeu (17), l'entrée de la tige navette (3) dans cette cavité étant facilitée par le fait que la partie inférieure de la tige navette présente, en (30), une forme sensiblement conique, alors que le moyeu (17) et le couvercle (27) présentent en (31) une forme d'entonnoir.

Lorsque la tige navette (3) est engagée dans la cavité (18) elle peut descendre jusqu'à ce que sa partie inférieure soit au niveau des mâchoires (19). Pour permettre le verrouillage de la tige navette par les mâchoires (19), la partie inférieure de la tige navette comprend un évidement (32) présentant en (33) une face d'appui pour ces mâchoires. De même, les faces inférieures des cavités (34) recevant, dans le moyeu (17), les mâchoires (19) présentent, en (35), des faces d'appui pour celles-ci, placées de l'autre côté des axes (20). On comprendra alors que, une fois qu'elle a été engagée dans les mâchoires (19), la tige navette (3), lorsqu'on la soulèvera, fera porter les mâchoires (19) à la fois sur les faces d'appuis (33) et (35) et soulèvera via les axes (20) l'ensemble du connecteur, par blocage des mâchoires (19) sur les faces d'appuis (33) et (35), tout en assurant un alignement de la tige navette (3) et du connecteur (7) le long de l'axe (12).

Pour déverrouiller la tige navette (3) du connecteur (7) on comprendra qu'il suffit d'utiliser l'actionneur (21) pour soulever via le poussoir (22) les mâchoires (19) dans une position, représentée en pointillés sur la figure, permettant de libérer la tige navette et de la lever hors du connecteur.

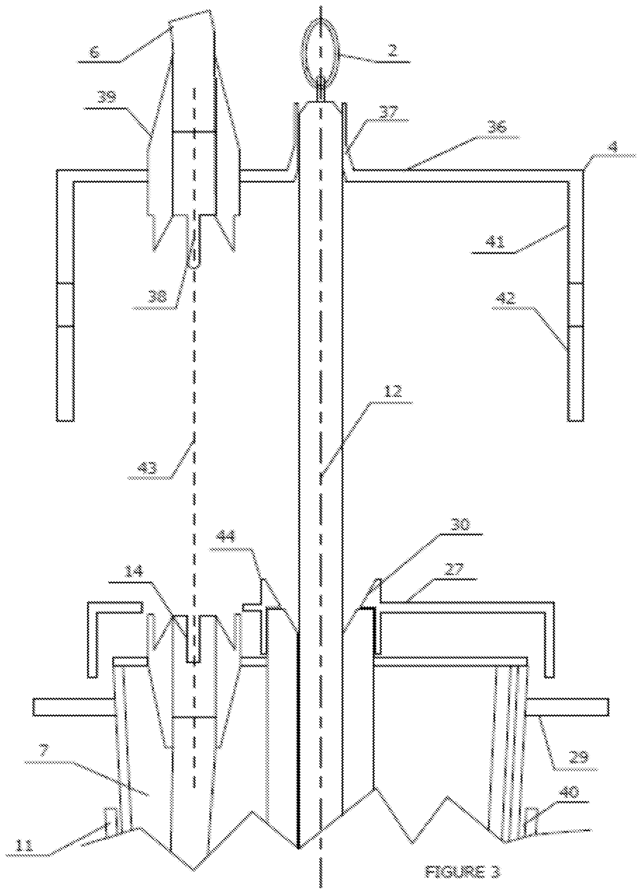

La figure 3 représente, toujours en coupe, l'engagement de la tige navette (3) dans l'embase. Celle-ci est composée principalement :
- d'un flasque (36) traversé, en son centre, par un écubier (37), qui présente un jeu réduit avec la tige navette (3) de façon à aligner, sur le même axe (12), l'embase (4) et le connecteur (7) ;
- de trois contacts (38) (que nous avons représentés ici, à titre d'exemple, comme des contacts mâles), entourés d'isolants (39) et reliés à trois câbles (40) correspondant aux trois phases utilisées, à titre d'exemple, pour échanger la puissance entre le navire et le quai ;
- à sa périphérie d'une jupe de géométrie sensiblement cylindrique (41), ayant un diamètre supérieur au diamètre extérieur du couvercle (27), qui est munie de deux découpes en forme d'entonnoir (42) dans lesquelles, lors de la montée du connecteur (7) vers l'embase (4) les
   ergots (29) vont s'engager, à jeu progressivement réduit, de façon à aligner, sur un même axe (43), là aussi à jeu réduit, chacun des contacts (38) de l'embase avec le contact (14) correspondant du connecteur (7).

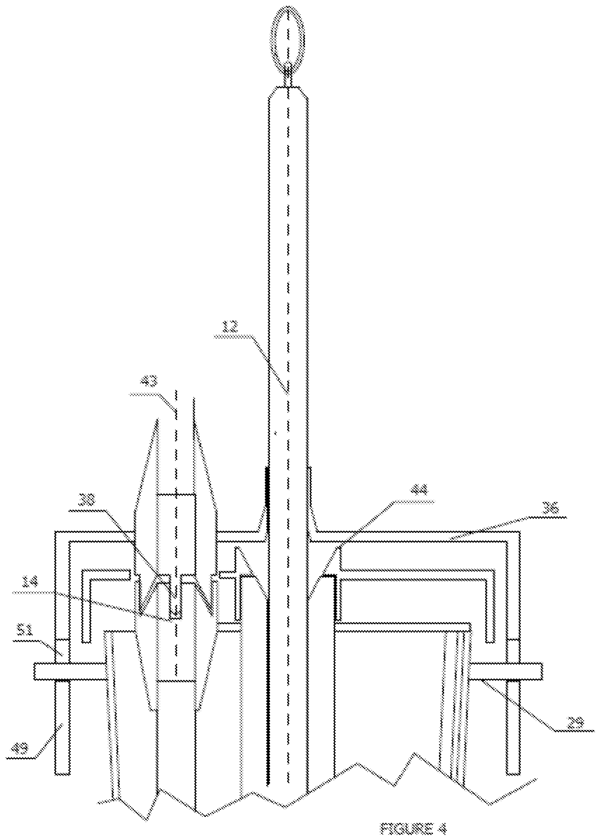

On comprendra aisément que, grâce à cet arrangement :
- lorsque la tige navette remonte le connecteur (7) et s'engage, tout d'abord, à jeu progressivement réduit, dans l'écubier (37), dans l'embase (4), celui-ci se trouve progressivement aligné sur le même axe (12) que l'embase,
- puis, lorsque les ergots (29) rencontrent les découpes (42) dans la jupe (41), celle-ci se trouve mis en rotation de façon que chacune des paires de contacts (38) et (14) se trouve progressivement alignée, les unes par rapport aux autres, le long des axes (43) ;
- lorsque la partie supérieure du couvercle (27) du connecteur bute, via la surface d'appui (44), contre la face inférieure du flasque (36) de l'embase, les 3 paires de contacts se trouvent engagées, à jeu réduit, les uns dans les autres, permettant l'échange de courant, comme illustré Figure 4.

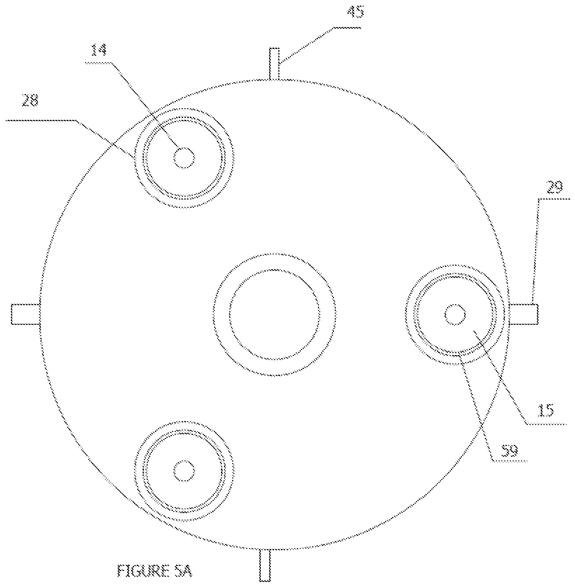

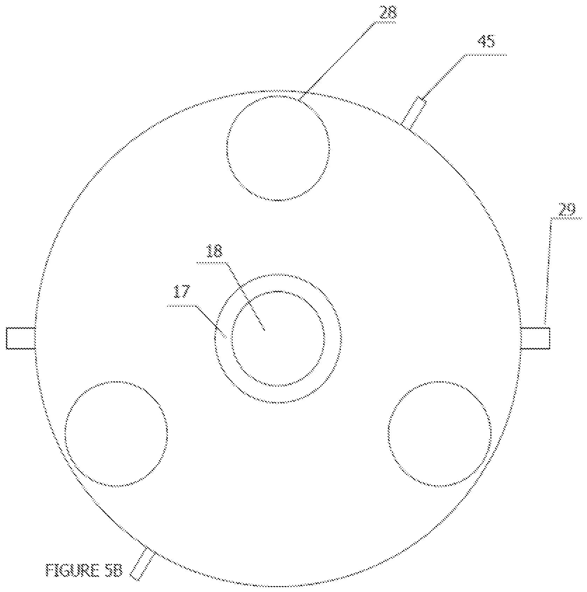

Les Figures 5a et 5b représentent une vue de dessus du connecteur lorsque le couvercle est respectivement ouvert ou fermé.

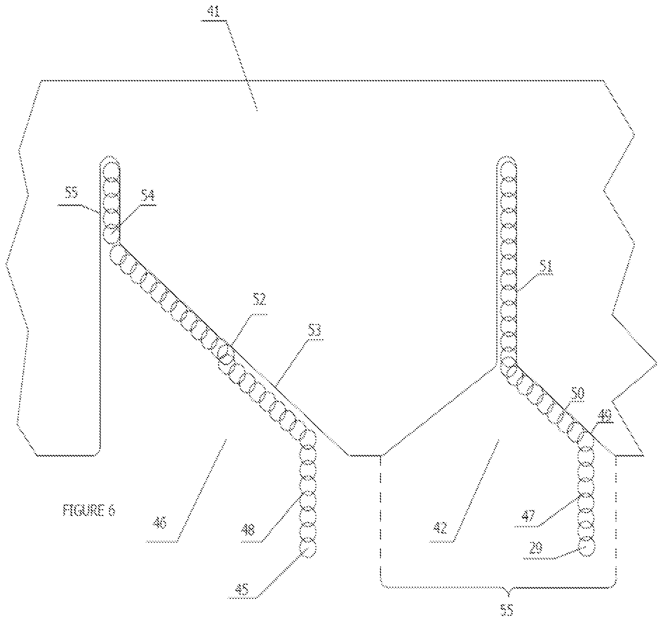

Cette ouverture ou fermeture du couvercle se fait par simple rotation de celui-ci autour de l'axe (12) par rapport au connecteur (7). Figure 5a, les ouvertures (28) sont alignées avec les contacts (14) permettant la connexion. Figure 5b, le couvercle a été mis en rotation (ici à titre d'exemple, d'une trentaine de degré dans le sens horaire, par exemple via un ressort de rappel non représenté ici, par soucis de simplification) par rapport au connecteur (7). Les ouvertures (28) se trouvent alors dégagées des contacts (14) et ceux-ci sont masqués par le couvercle (27). Cette mise en rotation du couvercle (27) par rapport au connecteur est réalisée par le biais d'une paire d'ergots (45) fixés à la périphérie du couvercle (27). Ces deux ergots (45) correspondent à deux ouvertures (46) en forme d'entonnoir dans la jupe (41) de l'embase (4). La figure 6 présente une demi-vue développée de cette jupe (41) ne comprenant, par souci de simplification, que l'une des deux ouvertures (42) et (46) ainsi qu'un exemple des trajectoires (47) et (48) empruntées, respectivement, par les ergots (29) et (45) lorsque le connecteur (7) est hissé vers l'embase (4) :
- dans un premier temps, ni les ergots (29) ni les ergots (45) ne sont en contact avec la jupe (41) et le couvercle (27) et le connecteur (7) sont libres en rotation, les ergots (29) et (45) se déplacent alors en parallèle les uns des autres, le couvercle (27) restant fermé par exemple du fait du ressort de rappel mentionné plus haut ;
- puis en (49) l'ergot (29) rencontre l'arête (50) de l'ouverture (42) et, glissant le long de cette arête, oriente progressivement le connecteur en rotation autour de l'axe (12), jusqu'à pénétrer, à jeu réduit, dans l'encoche verticale (51) garantissant ainsi l'alignement de chaque paire de contacts (14) et (38) le long de leur axe (43) respectif ;
- en ce qui concerne l'ergot (45), celui-ci reste libre jusqu'au point (52) où il rencontre l'arête (53) de l'ouverture (46), et glissant le long de cette arête, force la rotation du couvercle (27) par rapport au connecteur (7) jusqu'à ce que celui-ci, lorsque l'ergot (45) atteint le point (54), soit complètement ouvert, puis le maintient, en pénétrant, à jeu réduit, dans l'encoche verticale (55), dans cette position, permettant ainsi aux contacts (38) de passer dans les ouvertures (28) du couvercle (27) puis de s'engager dans les contacts (14) du connecteur (7), permettant ainsi l'échange du courant.

On notera qu'ainsi, quelle que soit la position angulaire initiale de l'ergot (29) dans la zone angulaire (54), dont l'amplitude sera, typiquement, de l'ordre d'une soixantaine de degrés, le connecteur se trouvera, lors de sa montée vers l'embase (4) progressivement orienté angulairement à jeu réduit (typiquement quelques degrés) permettant l'alignement des différents contacts, tandis que l'ergot (45) lorsqu'il rencontrera l'ouverture (46) assurera l'ouverture du couvercle (27).

Pour assurer ce pré-positionnement angulaire du connecteur dans la zone (54), on pourra, par exemple, utiliser la raideur de la nappe formée par les câbles (9) pour exercer sur le connecteur (7) un couple de rappel autour d'une position angulaire moyenne centrée sur l'ouverture (42).

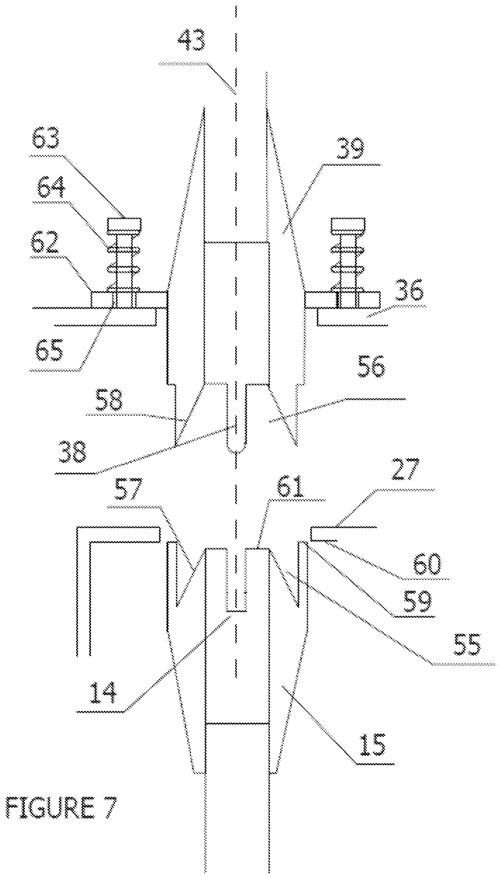

Pour assurer la qualité de la connexion entre les 3 paires de contacts (14) et (38), on notera que, comme représenté Figure 7, les matières isolantes (15) et (39) seront avantageusement choisies dans des matériaux élastiques, du type caoutchouc, ce qui évitera l'apparition d'un éventuel hyperstatisme entre la tige navette (3), l'embase (4) et le connecteur (7) lorsque que tous ces éléments sont mécaniquement engagés les uns dans les autres. De plus, on notera que la géométrie de l'isolant (15) du contact (14) se caractérise par le fait d'avoir une géométrie sensiblement cylindrique, avec, en (55) une forme sensiblement conique et concave, alors que l'isolant (39) du contact (38) présente en (56) une géométrie identique, mais convexe. On voit donc que, lors de l'accostage du connecteur (7) avec l'embase (4), les faces (57) et (58) des isolants vont progressivement s'engager l'une dans l'autre, participant à l'auto-alignement final, et indépendant, des trois paires de contacts (14) et (38).

Pour compenser un éventuel désalignement entre les 3 paires de contacts, la tige navette et l'embase, on pourra, éventuellement, voir Figure 7, monter les isolants (39) des contacts (38), sur une bride flottante (62) qui sera guidée par une série de vis (63) avec un jeu (65), des ressorts (64) comprimant cette bride contre le flasque (36). On voit qu'ainsi, chaque contact (38) pourra s'auto-aligner avec le contact (14) grâce au jeu (65), alors que les ressorts (64) forceront leur engagement dans les contacts (14). On comprendra que ceci pourrait être appliqué, alternativement, à l'isolant (15) du contact (14) vis-à-vis du flasque supérieur (13) du connecteur (7).

Enfin on notera que l'isolant (15) se caractérise par la présence, en (59) d'une face qui se situe :
- à une hauteur sensiblement supérieure à celle de la face inférieure (60) du couvercle (27) ;
- sensiblement au-dessus de la face supérieure (61) du contact (14).

Par ce biais, lorsque le couvercle (27) est fermé, la face (59) de l'isolant (15), du fait de son élasticité, frottera contre la face (60) du couvercle (27) protégeant ainsi le contact (14) d'éventuels contaminants tels que l'humidité ou les poussières.

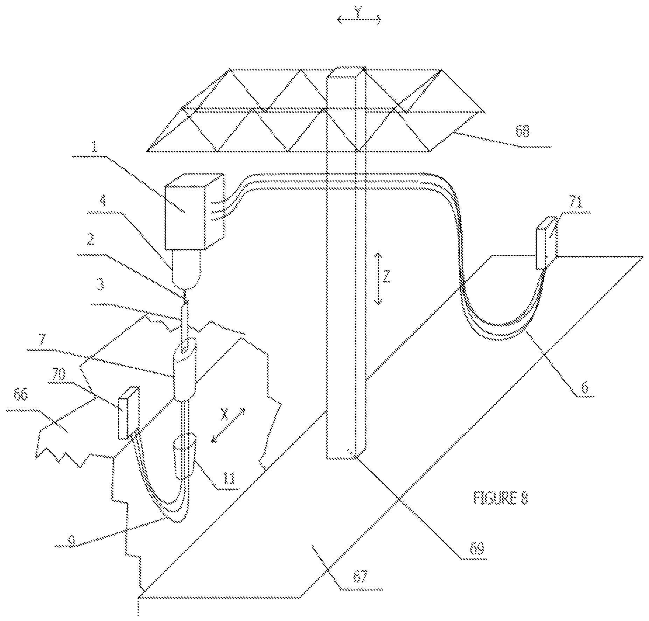

La Figure 8 présente un exemple de mise en oeuvre de l'invention dans le cas de l'alimentation d'un navire (66) lorsqu'il est accosté à un quai (67), caractérisé en ce que :
- Coté quai, l'embase (4) et le guindeau (1) sont suspendus à une flèche (68) pouvant se déplacer à la fois, horizontalement, le long de l'axe Y perpendiculaire à l'axe X du navire, et, verticalement, le long d'un mat (69) fixé sur le quai (67) ;
- Coté navire, le panier (11) recevant le connecteur (7) se déplace, horizontalement, le long de l'axe X.

De par cet arrangement, lorsque le navire (66) se présente le long du quai (67), le panier (11) et la flèche (68) peuvent être déplacés selon, respectivement l'axe X et les axes Y et Z pour aligner l'embase (4) et le guindeau (1) au-dessus du panier (11), pour permettre, en descendant la chaîne (2), d'engager la tige navette (3) dans le connecteur (7) et le hisser vers l'embase (4) jusqu'à établir la connexion entre le navire (66) et le quai (67), coté navire, les câbles (9) et la boite de connexion (70) et, côté quai, via les câbles (6) et la boite de connexion (71) .

On notera que l'exemple de mise en oeuvre de l'invention présenté Figure 8, n'est nullement limitatif, et on pourra, par exemple, considérer l'utilisation de l'invention pour :
- connecter d'autre types de mobiles que des navires, par exemple des véhicules routiers ;
- connecter un mobile avec une installation fixe ou avec un autre mobile.

Typiquement, à titre d'exemple, pour une connexion de courant triphasé d'une capacité de l'ordre de 500 ampères, le diamètre des 3 contacts (14) sera de l'ordre de 15 mm, celui des isolants (15) de l'ordre de 100 mm placé à une distance de l'ordre de 150 mm de l'axe (12), et répartis, angulairement, à environ 60° l'un de l'autre autour de cet axe. La tige navette (3) aura un diamètre de l'ordre de 80 mm, alors que le diamètre intérieur de l'écubier (37) et du moyeu (17) seront de l'ordre de 81 mm, les jeux () et () alors que le jeu (65) entre la bride (62) des contacts (39) sera de l'ordre de 2 mm.

## Revendications

1. Ensemble de connexion électrique entre un navire et une installation fixe, ou entre deux mobiles, **caractérisé en ce qu'**il se compose des éléments, de géométrie sensiblement cylindrique, suivants, de haut en bas, centrés autour d'un axe vertical (12) :
- un guindeau (1) manoeuvrant le long de cet axe vertical principal (12), via une chaîne ou un câble (2), une tige navette (3) ;
- une embase (4) recevant une pluralité de contacts électriques (38), et munie, dans sa partie inférieure, d'une jupe périphérique (41) munie d'ouvertures en forme d'entonnoir (42) et (46), grande ouverture vers le bas, et d'un écubier (37) dans lequel la tige navette (3) peut s'engager à jeu réduit ;
- d'un connecteur (7) muni :
• d'un flasque supérieur (13), recevant, en vis-à-vis des contacts (38) de l'embase (4), les contacts complémentaires (14) ;
• d'un, ou plusieurs, ergots (29) commandant la rotation progressive du connecteur (7) par rapport à l'embase (4) et autour de l'axe vertical principal (12) lorsqu'ils sont progressivement engagés dans la, ou les, ouvertures (42) dont les géométries sont définies pour que, lorsque le haut du connecteur s'engage dans l'embase (4), les contacts (14) et (38) soient progressivement alignés les uns avec les autres, de façon à permettre, lorsque le connecteur bute contre l'embase, leur engagement les uns dans les autres ;
• d'un couvercle (27) :
∘ d'un diamètre sensiblement inférieur à celui de la jupe (41)
∘ placé au-dessus du flasque supérieur (13) ;
∘ tournant autour de l'axe vertical principal (12) et protégeant les contacts (14) ;
∘ munie d'une pluralité d'ouvertures (28) permettant lorsqu'elles sont alignées avec les contacts (14), de permettre leur engagement dans les contacts (38) ;
∘ muni d'un, ou plusieurs, ergots (29) commandant sa rotation progressive autour de l'axe vertical principal (12) lorsqu'ils sont engagés dans la, ou les, ouvertures (46) dont la géométrie est définie pour que, lorsque les contacts (14) et (38) sont alignés du fait de la rotation du connecteur (7) commandée par l'engagement des ergots (29) dans les ouvertures (42), le couvercle tourne progressivement de façon à mettre les ouvertures (28) en face des contacts (14) et permettre l'engagement de ceux-ci dans les contacts (38) ;
∘ muni d'une ouverture, centrée sur l'axe vertical principal (12) en forme d'entonnoir (31) facilitant l'insertion à jeu progressivement réduit, lors de sa descente vers le connecteur (7), de la tige navette dans une cavité centrale (18) d'un moyeu (17), solidaire du flasque supérieur (13), jusqu'à ce qu'elle rencontre, en fin de course, un système de verrouillage (10), solidaire dudit moyeu (17) ;
• d'un moyeu (17) :
∘ transférant les efforts de la tige navette sur le système de verrouillage (10) vers le flasque supérieur (13) et l'ensemble du connecteur (7) ;
∘ servant de palier de rotation autour de l'axe vertical principal (12) pour le couvercle (27) ;
• d'un capot (26) de forme conique, entourant avec le couvercle (27) l'ensemble du connecteur (7) ;
• d'une tige navette (3) traversant, successivement, de haut en bas, à jeu réduit, l'écubier (37) de l'embase (4), puis le couvercle (27), puis à nouveau à jeu réduit, le moyeu (17) du connecteur (7), **caractérisée par** la présence, à son extrémité inférieure, d'une forme sensiblement conique (30) et d'un évidemment (32) présentant une face d'appui (19) pour le système de verrouillage (10) avec le connecteur (7) ;
• d'un panier (11), ayant une forme d'entonnoir, grande ouverture vers le haut, complémentaire de celle du capot (26) du connecteur, centrant celui-ci le long de l'axe vertical principal (12).

2. Ensemble de connexion électrique suivant la revendication 1, **caractérisé en ce qu'**une ou des mâchoires (19) tournant chacune autour d'un axe horizontal (20) ont une géométrie sensiblement trapézoïdale **caractérisée par le fait :**
- **que** leur face inférieure, en prenant à la fois appui sur une face (33) d'un évidemment (32) de la tige navette et sur une face (35) d'une cavité (34) du moyeu (17) permet de tracter avec celle-ci l'ensemble du connecteur (7) vers l'embase (4) ;
- **qu'**en position inclinée (16), la géométrie de ce trapèze fait que ces mâchoires libèrent la tige navette (3) du connecteur (7) et permettent de la hisser librement vers l'embase (4) ;
- **que** la géométrie de ce trapèze est telle que, par effet de gravité, ces mâchoires tournent autour de l'axe (20), et retombent du fait de leur poids, sur les faces d'appui (35) du moyeu (17).

3. Ensemble de connexion électrique suivant l'une des revendications précédentes, **caractérisé en ce que** les contacts (14) sont entourés par un isolant (15) constitué d'une matière sensiblement élastique et offrant une lèvre supérieure (59) qui :
• est sensiblement au-dessus de l'extrémité supérieure des contacts (14) ;
• en frottant sur la face inférieure (60) du couvercle (27) protège ces contacts (14) des pollutions extérieures.

4. Ensemble de connexion électrique suivant l'une des revendications précédentes, **caractérisé en ce que** les contacts (38) de l'embase (4) sont entourés d'un isolant (39) monté sur une bride flottante (62) :
• guidée, avec un certain jeu, par une série de vis (63) fixées dans l'embase (4) ;
• poussée par des ressorts (64), contre cette embase.

5. Ensemble de connexion électrique suivant l'une des revendications précédentes, **caractérisé en ce que** les contacts (14) du connecteur (7) sont entourés d'un isolant (15) monté sur une bride flottante :
• guidée, avec un certain jeu, par une série de vis fixées dans le flasque supérieur (13) du connecteur (7) ;
• poussée, par des ressorts contre ce flasque (13).

6. Ensemble de connexion électrique suivant l'une des revendications 3 à 5, **caractérisé en ce que** le ou les isolants (15) du ou des contacts (14) du connecteur (7) et du ou des contacts (38) de l'embase (4) présentent une géométrie cylindrique et que le ou les isolants des contacts du connecteur présentent une géométrie sensiblement conique et concave et que le ou les isolants des contacts de l'embase présentent, à jeu réduit, la géométrie convexe complémentaire.

7. Ensemble de connexion électrique suivant l'une des revendications précédentes, **caractérisé en ce que** l'alignement vertical sur un même axe vertical Z (12) d'un repère orthonormé X, Y et Z de ces différents composants est obtenu en :
- par le fait que le panier (11) recevant le connecteur(7) peut se déplacer selon l'axe X ;
- par le fait que le guindeau (1) et l'embase (4) sont rattachés à une flèche mobile (68) qui peut se déplacer le long de l'axe Y.

8. Ensemble de connexion électrique suivant la revendication 7, **caractérisée en ce que** la flèche mobile (68) à laquelle sont rattachés le guindeau et l'embase (4) peut se déplacer verticalement le long d'un mat (69).

## Patentansprüche

1. Anordnung zur elektrischen Verbindung zwischen einem Schiff und einer ortsfesten Anlage oder zwischen zwei beweglichen Objekten, **dadurch gekennzeichnet, dass** sie von oben nach unten aus folgenden Elementen mit im Wesentlichen zylindrischer Geometrie besteht, die um eine vertikale Achse (12) zentriert sind:
- einer Winde (1), die eine Pendelstange (3) über eine Kette oder ein Kabel (2) entlang dieser vertikalen Hauptachse (12) bewegt;
- einem Steckverbinder (4), der eine Vielzahl von elektrischen Kontakten (38) aufnimmt und in seinem unteren Teil mit einer Umfangsschürze (41) versehen ist, die mit Öffnungen in Form von Trichtern (42) und (46) versehen ist, mit der großen Öffnung nach unten, und mit einer Klüse (37), in die die Pendelstange (3) mit reduziertem Spiel eingreifen kann;
- und einem Verbinder (7), der versehen ist:
• mit einer oberen Endplatte (13), die gegenüber von Kontakten (38) des Steckerverbinders (4) die komplementären Kontakte (14) aufnimmt;
• mit einer oder mehreren Nasen (29), die die fortschreitende Drehung des Verbinders (7) in Bezug auf den Steckverbinder (4) und um die vertikale Hauptachse (12) steuern, wenn sie fortschreitend in die Öffnung bzw. die Öffnungen (42) eingefügt werden, deren Geometrien definiert sind, damit, wenn sich der obere Teil des Verbinders in den Steckverbinder (4) einfügt, die Kontakte (14) und (38) fortschreitend miteinander ausgerichtet werden, derart, dass, wenn der Verbinder an dem Steckverbinder anstößt, deren Eingriff ineinander gestattet wird;
• mit einer Abdeckung (27):
∘ mit einem Durchmesser, der im Wesentlichen kleiner als der der Schürze (41) ist
∘ die über der oberen Endplatte (13) platziert ist;
∘ die sich um die vertikale Hauptachse (12) dreht und die Kontakte (14) schützt;
∘ die mit einer Vielzahl von Öffnungen (28) versehen ist, die, wenn sie mit den Kontakten (14) ausgerichtet sind, deren Eingriff in die Kontakte ermöglichen;
∘ die mit einer oder mehreren Nasen (29) versehen ist, die ihre fortschreitende Drehung um die vertikale Hauptachse (12) steuern, wenn sie in die Öffnung bzw. die Öffnungen (46) eingefügt sind, deren Geometrie definiert ist, damit, wenn die Kontakte (14) und (38) aufgrund der Drehung des Verbinders (7) ausgerichtet sind, die durch den Eingriff der Nasen (29) in die Öffnungen (42) gesteuert wird, sich die Abdeckung fortschreitend derart dreht, dass die Öffnungen (28) gegenüber den Kontakten (14) platziert werden und den Eingriff derselben in die Kontakte (38) ermöglichen;
∘ die mit einer Öffnung versehen ist, die auf die vertikale Hauptachse (12) in Form eines Trichters (31) zentriert ist, der das Einfügen mit fortschreitend reduziertem Spiel der Pendelstange während ihres Absenkens in Richtung des Verbinders (7) in einen zentralen Hohlraum (18) einer Nabe (17) erleichtert, die fest mit der oberen Endplatte (13) verbunden ist, bis sie am Ende des Hubes auf ein Verriegelungssystem (10) trifft, das fest mit der Nabe (17) verbunden ist;
• mit einer Nabe (17):
∘ die die Kräfte der Pendelstange auf das Verriegelungssystem (10) in Richtung der oberen Endplatte (13) und die Anordnung des Verbinders (7) überträgt;
∘ die als Drehlager zur Drehung um die vertikale Hauptachse (12) für die Abdeckung (27) dient;
• mit einer Kappe (26) konischer Form, die mit der Abdeckung (27) die Anordnung des Verbinders (7) umgibt;
• mit einer Pendelstange (3), die nacheinander von oben nach unten mit reduziertem Spiel die Klüse (37) des Steckverbinders (4), dann die Abdeckung (27) und dann erneut mit reduziertem Spiel die Nabe (17) des Verbinders (7) durchsetzt, **gekennzeichnet durch** das Vorhandensein an ihrem unteren Ende einer im Wesentlichen konischen Form (30) und einer Aussparung (32), die eine Auflagefläche (19) für das Verriegelungssystem (10) zur Verriegelung mit dem Verbinder (7) aufweist;
• mit einem Korb (11), der eine Form eines Trichters hat, mit der großen Öffnung nach oben, komplementär zu der der Kappe (26) des Verbinders, und der diesen entlang der vertikalen Hauptachse (12) zentriert.

2. Anordnung zur elektrischen Verbindung nach Anspruch 1, **dadurch gekennzeichnet, dass** eine oder mehrere Spannbacken (19), die sich jeweils um eine horizontale Achse (20) drehen, eine im Wesentlichen trapezförmige Geometrie haben, die durch die Tatsache gekennzeichnet ist, dass
- ihre Unterseite, indem sie gleichzeitig auf einer Fläche (33) einer Aussparung (32) der Pendelstange und auf einer Fläche (35) eines Hohlraums (34) der Nabe (17) aufliegt, ermöglicht, mit der Pendelstange die Anordnung des Verbinders (7) in Richtung des Steckverbinders (4) zu ziehen;
- in der geneigten Position (16) die Geometrie dieses Trapezes bewirkt, dass diese Spannbacken die Pendelstange (3) des Verbinders (7) freigeben und ermöglichen, diese ungehindert in Richtung des Steckverbinders (4) hochzuziehen,
- die Geometrie dieses Trapezes derart ist, dass sich diese Spannbacken mittels Schwerkraft um die Achse (20) drehen und aufgrund ihres Gewichts auf die Auflageflächen (35) der Nabe (17) zurückfallen.

3. Anordnung zur elektrischen Verbindung nach einem der vorhergehenden Ansprüche, **dadurch gekennzeichnet, dass** die Kontakte (14) von einem Isolator (15) umgeben sind, der aus einem im Wesentlichen elastischen Material gebildet ist und eine obere Lippe (59) bietet, die:
• sich im Wesentlichen über dem oberen Ende der Kontakte (14) befindet;
• indem sie an der Unterseite (60) der Abdeckung (27) reibt, diese Kontakte (14) vor äußeren Verschmutzungen schützt.

4. Anordnung zur elektrischen Verbindung nach einem der vorhergehenden Ansprüche, **dadurch gekennzeichnet, dass** die Kontakte (38) des Steckverbinders (4) von einem Isolator (39) umgeben sind, der auf einem schwimmenden Flansch (62) angebracht ist:
• der mit einem gewissen Spiel von einer Reihe von Schrauben (63) geführt wird, die an dem Steckverbinder (4) befestigt sind;
• der von Federn (64) gegen diesen Steckverbinder gedrückt wird.

5. Anordnung zur elektrischen Verbindung nach einem der vorhergehenden Ansprüche, **dadurch gekennzeichnet, dass** die Kontakte (14) des Verbinders (7) von einem Isolator (15) umgeben sind, der auf einem schwimmenden Flansch angebracht ist:
• der mit einem gewissen Spiel von einer Reihe von Schrauben geführt wird, die in der oberen Endplatte (13) des Verbinders (7) befestigt sind;
• der von Federn gegen diese Endplatte (13) gedrückt wird.

6. Anordnung zur elektrischen Verbindung nach einem der Ansprüche 3 bis 5, **dadurch gekennzeichnet, dass** der oder die Isolatoren (15) des oder der Kontakte (14) des Verbinders (7) und des oder der Kontakte (38) des Steckverbinders (4) eine zylindrische Geometrie aufweisen und dass der oder die Isolatoren der Kontakte des Verbinders eine im Wesentlichen konische und konkave Geometrie aufweisen und dass der oder die Isolatoren der Kontakte des Steckverbinders die komplementäre konvexe Geometrie mit reduziertem Spiel aufweisen.

7. Anordnung zur elektrischen Verbindung nach einem der vorhergehenden Ansprüche, **dadurch gekennzeichnet, dass** die vertikale Ausrichtung an einer selben vertikalen Achse Z (12) eines orthonormierten Bezugssystems X, Y und Z dieser verschiedenen Bestandteile erhalten wird:
- durch die Tatsache, dass der Korb (11), der den Verbinder (7) aufnimmt, sich entlang der X-Achse verschieben kann;
- durch die Tatsache, dass die Winde (1) und der Steckverbinder (4) an einem beweglichen Ausleger (68) befestigt sind, der sich entlang der Y-Achse verschieben kann.

8. Anordnung zur elektrischen Verbindung nach Anspruch 7, **dadurch gekennzeichnet, dass** der bewegliche Ausleger (68), an dem die Winde und der Steckverbinder (4) befestigt sind, sich entlang eines Mastes (69) vertikal verschieben kann.

## Claims

1. An assembly for making an electrical connection between a vessel and a fixed installation, or between two movable objects, the assembly being **characterized in that** it is made up of the following elements of substantially cylindrical shape, going downwards and centered around a vertical axis (12):
- a windlass (1) using a chain or a cable (2) to move a shuttle rod (3) along this main vertical axis (12) ;
- a base (4) receiving a plurality of electrical contacts (38) and provided in its bottom portion with a peripheral skirt (41) having funnel-shaped openings (42 and 46), larger openings facing downwards, and a hawse pipe (37) in which the shuttle rod (3) can engage with small clearance; and
- a connector (7) provided with:
- a top endplate (13) receiving, facing the contacts (38) of the base (4), complementary contacts (14) ;
- one or more lugs (29) controlling progressive turning of the connector (7) relative to the outlet (4) and about the main vertical axis (12) while they are being progressively engaged in the opening(s) (42) of shapes that are defined so that when the top of the connector engages in the base (4), the contacts (14 and 38) are brought progressively into mutual alignment so as to make it possible for them to engage in one another when the connector comes into abutment against the outlet;
- a lid (27):
- of a diameter perceptibly smaller than the diameter of the skirt (41);
- placed above the top endplate (13);
- turnable about the main vertical axis (12) and protecting the contacts (14);
- provided with a plurality of openings (28) that, when in alignment with the contacts (14), enable the contacts to be engaged with the contacts (38);
- one or more lugs (29) controlling progressive turning of the lid about the main vertical axis (12) when they are engaged in the opening(s) (46) of shape that is defined so that when the contacts (14 and 38) are in alignment as a result of the connector (7) turning under the control of the lugs (29) engaging in the openings (42), the lid turns progressively so as to bring the openings (28) to face the contacts (14) and enable them to engage the contacts (38); and
- provided with an opening centered on the main vertical axis (12), of funnel-shape (31) and facilitating insertion of the shuttle rod with progressively reducing clearance on being lowered towards the connector (7) into a central cavity (18) of a hub (17) that is secured to the top endplate (13), until, at the end of its stroke, the rod encounters a locking system (10) secured to said hub (17):
- a hub (17):
- transferring forces from the shuttle rod against the locking system (10) to the top endplate (13) and the connector assembly (7); and
- acting as a rotary bearing about the main vertical axis (12) for the lid (27);
- a cover (26) of conical shape, and together with the lid (27) surrounding the entire connector (7);
- a shuttle rod (3) passing downwards with small clearance successively through the hawse pipe (37) of the base (4), then the lid (27), and once more with small clearance through the hub (17) of the connector (7), **characterized by** the presence at its bottom end of a substantially conical shape (30) and of a recess (32) presenting a bearing face (19) for the locking system (10) for locking with the connector (7); and
- a basket (11) of funnel-shape with its large opening towards the top, complementary to the shape of the cover (26) of the connector, and centering it along the main vertical axis (12).

2. An electrical connection assembly according to claim 1, **characterized in that** one or more jaws (19) each turning about a horizontal axis (20) has a shape that is substantially trapezoidal, **characterized by** the facts that:
- their bottom faces bearing both against a face (33) of a recess (32) in the shuttle rod and against a face (35) of a cavity (34) in the hub (17) enable the rod to apply traction to the connection assembly (7) towards the base (4);
- in the sloping position (16), the shape of the trapezoid causes the jaws to release the shuttle rod (3) from the connector (7) and enable it to be hoisted freely towards the base (4); and
- the shape of the trapezoid is such that under the effect of gravity, the jaws turn about their pins (20) and drop under their own weight against the bearing faces (35) of the hub (17).

3. An electrical connection assembly according to either preceding claim, **characterized in that** the contacts (14) are surrounded by insulation (15) made of a substantially resilient material and providing a top lip (59) that:
- is perceptibly above the top ends of the contacts (14); and
- by rubbing against the bottom face (60) of the lid (27) protects the contacts (14) from external pollution.

4. An electrical connection assembly according to any preceding claim, **characterized in that** the contacts (38) of the base (4) are surrounded by insulation (39) mounted on respective floating flanges (62):
- guided with a certain amount of clearance by a series of screws (63) fastened in the base (4); and
- urged by springs (64) against the outlet.

5. An electrical connection assembly according to any preceding claim, **characterized in that** the contacts (14) of the connector (7) are surrounded by insulation (15) mounted on respective floating flanges:
- guided, with a certain amount of clearance, by a series of screws fastened in the top endplate (13) of the connector (7); and
- urged by springs against the endplate (13).

6. An electrical connection assembly according to any preceding claim, **characterized in that** the insulation (15) of the contact(s) (14) of the connector (7) and of the contact(s) (38) of the base (4) presents a shape that is cylindrical and that the insulation of the contacts of the connector presents a shape that is substantially conical and concave, while the insulation of the contacts of the outlet presents, with small clearance, a convex shape that is complementary.

7. An electrical connection assembly according to any preceding claim, **characterized in that** the vertical alignment on a common vertical axis Z (12) in an orthogonal Y, Y, Z reference frame of these various components is obtained:
- by the fact that the basket (11) receiving the connector (7) can move along the X axis; and
- by the fact that the windlass (1) and the base (4) are attached to a movable boom (68) that can move along the Y axis.

8. An electrical connection assembly according to claim 7, **characterized in that** the movable boom (68) to which the windlass and the base (4) are attached can move vertically along a mast (69).
